# EUROPEAN PATENT APPLICATION

(11) **EP 4 098 130 A1**
(43) Date of publication of application: **07.12.2022**
(21) Application number: 21747546.6
(22) Date of filing: 29.01.2021
(51) Int. Cl.: A23L 7/109

(54) **PRODUCTION METHOD FOR NOODLES**

(30) Priority: 30.01.2020 JP 2020013992
(71) Applicant: Nisshin Seifun Welna Inc., Tokyo 101-8441 (JP)
(72) Inventor: NABESHIMA, Takuma, Fujimino-shi, Saitama 356-8511 (JP); KOMABAYASHI, Genki, Fujimino-shi, Saitama 356-8511 (JP); WATANABE, Takenori, Fujimino-shi, Saitama 356-8511 (JP); KUSHIRO, Kanako, Fujimino-shi, Saitama 356-8511 (JP)
(74) Representative: Blodig, Wolfgang
(86) International application number: PCT/JP2021/003140
(87) International publication number: WO 2021/153707

(57) **Abstract**

Provided are noodles having a preferable texture with good elasticity, viscosity, and crispness, and capable of maintaining a flavor of a sauce during chewing. Provided is also a method for producing noodles, including extruding a dough at a pressure of 40 kgf/cm² to 120 kgf/cm², in which the dough is prepared from a raw material flour containing durum wheat flour and moderate wheat flour having a crude protein content of 10% or more at a mass ratio of 1 : 99 to 29 : 71.

## Description

### Technical Field

The present invention relates to a method for producing noodles.

### Background Art

Noodles are produced using mainly wheat flour as a raw material. Wheat protein and starch contained in wheat flour can impart moldability and a characteristic texture to noodle dough. Further, wheat protein and starch contained in wheat flour have different properties depending on the wheat variety and place of production. Accordingly, the kind of flour as a raw material and the production method are generally changed in accordance with the kind of noodles to be produced. For example, dried pasta is produced by extruding a dough prepared from durum wheat flour of a strong gluten at high pressure and then drying the extruded product over a long period of time, and such dried pasta has a good chewability. Fresh pasta is produced by rolling a dough prepared from durum wheat flour into a noodle strip and cutting out the dough into noodle strings, and such fresh pasta is softer and more elastic than dried pasta. Udon noodles are produced by rolling a dough prepared from moderate wheat flour which forms gluten with high hydration property and has a soft starch into a noodle strip and cutting out the rolled dough into noodle strings, and such udon noodles characteristically has a chewability with a glutinous soft texture.

Various modifications have been made conventionally to the raw material flour and the production method for various noodles. Further, noodles have also been created via means different from traditional raw materials and production methods. For example, Patent Literatures 1 and 2 describe that, in a method for producing frozen cooked fresh noodles which includes a step of boiling and cooking fresh noodles produced by extruding a dough under high pressure, and then freezing the fresh noodles, the raw material flour of the dough contains durum flour and at least one selected from starch, processed starch, and common wheat flour at a mass ratio of 30 : 70 to 95 : 5. Additionally, Patent Literature 3 describes a method for producing noodles which includes high-pressure extrusion of a dough prepared from a raw material flour containing moderate wheat flour, extra strong wheat flour, and wheat protein.

In recent years, a sauce for seasoning noodles has been continuously improved, and foods in which noodles and the sauce are integrated to exhibit a preferable flavor have been provided. However, for noodles to be eaten by chewing such as pasta and udon noodles, even when noodles are eaten together with the sauce, only the noodles remain in the mouth during chewing and the flavor of the sauce is likely to be lost. For thick noodles, it is more of the case.

### Citation List

### Patent Literature

Patent Literature 1: WO 2013/094724 A
Patent Literature 2: WO 2013/171930 A
Patent Literature 3: WO 2018/021448 A

### Summary of Invention

### Technical Problem

The present invention provides noodles that have an elasticity and viscosity like udon noodles and a preferable texture with crispness like pasta, and can maintain the flavor of a sauce during chewing when the noodles are eaten with the sauce.

### Solution to Problem

The present inventors found that noodles having a preferable texture as described above can be produced by preparing a dough containing durum wheat flour and moderate wheat flour which has a crude protein content of 10% or more at a predetermined mass ratio, and extruding the dough at a predetermined pressure. The present inventors also found that the flavor of the sauce can be maintained during chewing when the noodles are eaten together with the sauce.

Accordingly, the present invention provides a method for producing noodles as one aspect, including extruding a dough at a pressure of 40 kgf/cm² to 120 kgf/cm², in which the dough is prepared from a raw material flour containing durum wheat flour and moderate wheat flour having a crude protein content of 10% or more at a mass ratio of 1 : 99 to 29 : 71.

### Advantageous Effects of Invention

Noodles produced by the method of the present invention is noodles with an unconventional preferable texture in which the noodles have an elastic and glutinous texture like udon noodles and also has a crispy texture like pasta. Further, when the noodles produced by the method of the present invention are eaten together with the sauce, the flavor of the sauce is maintained together with the noodles during chewing, so that people can enjoy a preferable flavor of integrating the noodles and the sauce.

### Description of Embodiments

Examples of noodles produced by the method for producing noodles according to the present invention (hereinafter referred to as "the present method") include pasta categories of long pasta such as spaghetti or fettuccine, short pasta such as macaroni or penne, and sheet-shaped pasta such as lasagna; noodle strings such as udon noodles, hiyamugi noodles, somen noodles, kishimen noodles, and Chinese noodles; and noodle skins such as dumpling skins. Of them, long pasta and noodle strings such as udon noodles are preferable.

For maintaining the flavor of the sauce during chewing, the noodles produced by the present method are preferably thick noodles or flat noodles. For example, the noodles are round noodles (for example, extruded long pasta) having a diameter of preferably 1.6 mm or more, more preferably 1.8 mm or more, and still more preferably 2.0 mm or more, or flat noodles (for example, udon noodles or long pasta) having a width of preferably 1.2 mm or more, more preferably 1.5 mm or more, and still more preferably 2.0 mm or more. Examples of such noodles include flat udon noodles or long pasta cut out with a No. 18 or smaller cutting blade, and long pasta extruded from a die having a diameter of 1.8 mm or more. The length of the noodles is not particularly limited, and is preferably about 15 to 23 cm for easy eating and compatibility with the sauce.

In the present method, a dough prepared from a raw material flour containing durum wheat flour and moderate wheat flour having a crude protein content of 10% or more is extruded to produce noodles.

The durum wheat flour used in the present invention may be any durum wheat flour generally used for pasta, and examples thereof include durum semolina, durum wheat flour having a finer particle size, or a mixture thereof. The durum wheat flour may be obtained by milling an endosperm part of durum wheat via a usual method.

Examples of the moderate wheat flour used in the present invention include flour derived from medium hard wheat and flour derived from soft wheat, or a mixture thereof. The wheat variety that produces the medium hard wheat or the soft wheat is preferably one that can provide moderate wheat flour suitable for noodles, particularly for udon noodles. Examples of wheat varieties that produce the medium hard wheat or the soft wheat include Japanese wheats such as Sato no Sora, Kita Honami, Sanuki no Yume 2009, Kitamoe, Fukusayaka, Ayahikari, Kinu no Nami, Hokushin, Norin No. 61, Sirogane Komugi, Chikugoizumi, Taisetsu Komugi, Sirane Komugi, Nambu Komugi, Horoshiri Komugi, Tsurupikari, Nishihonami, Takune Komugi, Nebarigoshi, Sanuki no Yume 2000, Kitakami Komugi, Tamaizumi, Fukuhonoka, Shirasagi Komugi, Chihoku Komugi, Iwai no Daichi, Daichi no Minori, Bandouwase, Kinuazuma, Haru no Kagayaki, Abukumawase, Koyuki Komugi, Shunyou, Kinuhime, Kinuiroha, Norin No. 26, etc., and include the standard white varieties produced in Australia such as Eradu, Cadoux, Arrino, Calingiri, Aroona, and Binnu, etc.; but the varieties are not limited thereto.

For the moderate wheat flour used in the present invention, any wheat flour derived from the medium hard wheat and the soft wheat obtained from the wheat varieties mentioned above can be used solely or in combination of two or more kinds thereof. Alternatively, commercially available moderate wheat flour for noodles can be used solely or in combination of two or more kinds thereof.

The moderate wheat flour used in the present invention may have a crude protein content of 10% or more, preferably 10.3% or more, more preferably 10.5% or more, and still more preferably 10.8% or more. The crude protein content of wheat flour in the present description is measured by Kjeldahl method. Additionally, the crude protein content of common moderate wheat flour is about 8.0 to 9.0%. In the present invention, by using the high-protein moderate wheat flour as described above, a preferable texture can be imparted to noodles, and when the noodles are eaten together with the sauce, a preferable flavor of integrating the noodles and the sauce can be tasted.

The moderate wheat flour used in the present invention can be obtained by milling the endosperm part of the medium hard wheat or the soft wheat described above. Wheat has a higher protein content at fractions closer to the center of the endosperm part, and has a higher starch content at fractions around the endosperm part. Accordingly, it is possible to prepare a desired high-protein moderate wheat flour by separating the fractions with a high protein content in the milling step. For example, it is possible to prepare a high-protein moderate wheat flour which can be used in the present invention by separating a fraction with a high protein content in the milling step. Alternatively, high-protein moderate wheat flour can be prepared by milling wheat obtained from a wheat variety with a high protein content. For the moderate wheat flour used in the present invention, the upper limit of the crude protein content is not particularly limited, and is preferably 11% or less so as to control milling cost.

In the present method, the content ratio of the durum wheat flour and the high-protein moderate wheat flour in the raw material flour of the noodle dough is preferably the durum wheat flour : the moderate wheat flour = 1 : 99 to 29 : 71, more preferably 3 : 97 to 26 : 74, and still more preferably 7 : 93 to 23 : 77 by mass ratio. By using the raw material flour having such compositions, a preferable texture can be imparted to noodles, and when the noodles are eaten together with a sauce, a preferable flavor of integrating the noodles and the sauce can be tasted. The total content of the durum wheat flour and the high-protein moderate wheat flour in the raw material flour is preferably 70 to 100 mass% and more preferably 75 to 100 mass%.

The raw material flour may contain other raw materials that can be usually used for producing noodles as needed, in addition to the durum wheat flour and the high-protein moderate wheat flour. Examples of the other raw materials include cereal flour other than the durum wheat flour and the high-protein moderate wheat flour mentioned above (for example, hard wheat flour, semi-hard flour, moderate wheat flour other than the high-protein moderate wheat flour described above, soft wheat flour, whole-grain flour, and cereal flour other than wheat flour), starches, saccharides, eggs, salt, fat and oil, emulsifiers, thickeners, and seasonings. The raw material flour may contain a protein material (for example, purified wheat protein such as gluten), but preferably the protein material is not contained in the raw material flour. The other raw materials may be added to a premix containing the durum wheat flour and the high-protein moderate wheat flour, or may be added at the time of kneading the raw material flour and kneading water, which is described in the following. The content of the other raw materials in the raw material flour is preferably 30 mass% or less, and more preferably 25 mass% or less.

By kneading the raw material flour with the kneading water, a noodle dough can be prepared. Water, saline, brine, and the other compositions that are usually used for producing noodle dough can be used as the kneading water. The amount of the kneading water added to the raw material flour is preferably 15 to 35 parts by mass, more preferably 18 to 35 parts by mass, still more preferably 20 to 35 parts by mass, and still more preferably 26 to 32 parts by mass with respect to 100 parts by mass of the raw material flour. When the amount of the kneading water is less than 15 parts by mass, the extruded noodles are easily broken, and when the amount of the kneading water is more than 35 parts by mass, the dough is weakened and a desired texture may not be imparted to the noodles.

In the present method, noodles (fresh noodles) are obtained by extruding the noodle dough under a predetermined pressure. In other words, the dough is extruded at a pressure of preferably 40 kgf/cm² to 120 kgf/cm², more preferably 50 kgf/cm² to 100 kgf/cm² to produce noodles according to the present method. The extrusion can be performed under reduced pressure, and the degree of reduced pressure is preferably -200 mmHg to -760 mmHg, and more preferably -600 mmHg to -760 mmHg. For the extrusion of the dough, an extrusion noodle making machine and the other machines used for producing dried pasta can be used. In the present method, fresh noodles may be produced by extruding a dough obtained by kneading the raw material flour and the kneading water, and the repetition times of the kneading step and the extrusion step is not particularly limited.

The fresh noodles obtained by the procedure above may be dried to obtain dried noodles or semi-dried noodles, or may be subjected to a treatment such as surface gelatinization. The dried or semi-dried noodles may be further stored in a chilled or frozen state, or cooked by heating. Additionally, in the drying treatment, drying is conducted by actively blowing air or reducing the pressure, which does not include moisture evaporation in a natural state. Preferably, the fresh noodles are provided in the following ways: chilled or frozen, or heat-cooked without undergoing a treatment such as drying or surface gelatinization. Further, the heat-cooked noodles may be also chilled or frozen.

Preferably, the heat-cooked noodles are eaten together with a sauce. For the sauce, any sauce that can be used for noodles may be employed, and examples thereof include but are not limited to, a dipping sauce for soba noodles, a sauce for yakisoba noodles, a thickened gravy sauce, a Worcestershire sauce, a curry sauce, a cream sauce, an oil sauce, a salty sauce, a soy sauce, a miso sauce, a meat sauce, a Neapolitan sauce, a tomato sauce, a carbonara sauce, a brown sauce, and a white sauce.

The means for heat-cooking the noodles may be any cooking method for the noodles to make it eatable, and examples thereof include normal methods such as boiling, steaming, and heating in a microwave oven. Any normal method used in the food field can be used for chilling or freezing noodles. Either quick freezing or slow freezing can be employed for freezing process, but quick freezing is preferable.

Preferably, the noodles provided in the present invention are frozen cooked noodles. In other words, the noodles are preferably heat-cooked, frozen, and stored in a freezing state in the present invention. Usual procedures performed for the noodles can be adopted for freezing the heat-cooked noodles. For example, it is preferable that the heat-cooked noodles are cooled by means such as draining, water cooling, or air cooling as needed, then divided into a predetermined amount, for example, about 150 to 300 g for one serving, and subjected to a freezing treatment. The freezing treatment can be performed in the same manner as the freezing process described above. The frozen noodles may be stored under normal frozen-storage conditions.

The frozen cooked noodles may be frozen together with the sauce. For example, the heat-cooked noodles may be distributed on a tray, for example, and then frozen with a sauce on top of it, or the heat-cooked noodles may be entangled with the sauce and then served on the tray and frozen. Alternatively, the cooked noodles that has been frozen separately and the sauce may be frozen together. The kinds of sauces that can be used are as described above.

The noodles produced according to the present invention have an elasticity and viscosity like udon noodles and a preferable texture with crispness like pasta, and a flavor of integrating the noodles and the sauce can be tasted when the noodles are eaten with the sauce. Further, the noodles produced according to the present invention can maintain a preferable texture and flavor as described above even when being thawed and reheated after frozen storage. Additionally, since the noodles produced according to the present invention have a finely smooth surface by high-pressure extrusion, even if the noodles are frozen and stored together with a sauce, deterioration of the texture and appearance of the noodles due to excessive absorption of the sauce into the noodles can be prevented.

### Examples

Hereinafter, the present invention is described in more detail referring to Examples, but is not limited only thereto.

### Raw materials

Durum semolina flour: flour made from durum wheat (crude protein content of 12.5%)
Durum wheat flour: flour made from durum wheat (crude protein content of 12.5%)
Moderate wheat flour A: flour made from Kita Honami produced in Hokkaido (crude protein content of 10.8%)
Moderate wheat flour B: Hyogetsu flour (crude protein content of 10.5%; manufactured by Kida Flour milling Co., Ltd.)
Moderate wheat flour C: Fuyuezo flour (crude protein content of 10.0%; manufactured by Kida Flour milling Co., Ltd.)
Moderate wheat flour D: Kita Honami flour (crude protein content of 9.5%; manufactured by ALNATURIA Corporation)
Moderate wheat flour E: Menhassyu flour (crude protein content of 9.6%; manufactured by Nisshin Flour Milling Inc.)
Hard wheat flour: ALNATURIA Kitanokaori Straight (crude protein content of 11.2%; manufactured by ALNATURIA Corporation)
Semi-hard flour: E65 (crude protein content of 11.3%; manufactured by Ebetsu Flour Milling Co., Ltd.)

### Test Example 1

### 1) Production of cooked noodles

Raw material flour with the compositions shown in Table 1 was prepared. To 100 parts by mass of the obtained raw material flour, 26 parts by mass of water was added and kneaded to prepare a noodle dough. The dough was extruded under a reduced pressure of -600 mmHg at a pressure of 70 kgf/cm² using an extrusion noodle making machine to obtain fresh noodles (spaghetti; thickness 1.8 mm, length 20 cm). The obtained fresh noodles were boiled with hot water for 5 minutes and drained to produce cooked noodles. The cooked noodles were divided into 180 g per tray (160 mm × 120 mm; made of polypropylene), and 100 g of commercially available carbonara sauce (manufactured by Nisshin Foods Inc.) was placed on the top of the noodle mass to produce cooked noodles. The cooked noodles thus obtained was stirred so that the noodles and the sauce were mixed substantially uniformly, and the texture of the noodles and the integrity of the noodles and the sauce were evaluated.

### 2) Production of frozen cooked noodles

The cooked noodles produced in the same procedure as described in 1) was packed in polypropylene bags and quickly frozen at -35°C to produce frozen cooked noodles. The obtained frozen noodles were stored at -18°C for one week, taken out from the bag, and heated and thawed in a microwave oven for 4.5 minutes (at 600 W). The thawed noodles thus obtained was stirred so that the noodles and the sauce were mixed substantially uniformly, and the texture of the noodles and the integrity of the noodles and the sauce were evaluated.

### 3) Evaluation

The texture and flavor of noodles were evaluated by 10 trained panelists based on the following evaluation criteria. The average scores of the evaluations of 10 panelists were determined. The results are shown in Table 1.

### <Evaluation Criteria>

### (Texture of noodles)

5: The oral mucosa can have just the right amount of viscosity to feel elasticity, and crispness during chewing is also very good. Very good texture.
4: The oral mucosa can have the viscosity to feel elasticity, and crispness during chewing is also good. Good texture.
3: The oral mucosa can have a slight viscosity to feel elasticity, and crispness during chewing is also slightly hard or soft.
2: The oral mucosa can have little viscosity to feel elasticity, and crispness during chewing is also bad. Bad texture.
1: Almost no elasticity is felt in the oral mucosa, and crispness feels hard or sticky during chewing. Very bad texture.

### (Integration of noodles and sauce)

5: One bite can be swallowed after 5 to 12 times of chewing, and the noodles and the sauce remain in mouth in a well-balanced manner during chewing. Very good integration.
4: One bite can be swallowed after 5 to 12 times of chewing, and the sauce somewhat quickly disappear in the mouth during chewing. Good integration.
3: One bite can be swallowed after 5 to 12 times of chewing, and the sauce quickly disappear in the mouth during chewing and only the noodles are chewed for 1/2 to 1/3 of the times of chewing.
2: One bite can be swallowed after 5 to 12 times of chewing, and the sauce quickly disappear in the mouth during chewing and only the noodles are chewed for 1/2 or more of the times of chewing. Bad integration.
1: One bite needs to be chewed for 13 times or more, the sauce disappears quickly during chewing and only the noodles are chewed; or one bite is swallowed after 4 times of chewing or less and it is difficult to feel the taste of the noodles and the sauce. Very bad integration.

**[Table 1]**

| | | Production examples | | | | Comparative examples | | | | Reference examples | |
|---|---|---|---|---|---|---|---|---|---|---|---|
| | | 1 | 2 | 3 | 4 | 1 | 2 | 3 | 4 | 1 | 2 |
| Compositions of raw material flour (parts by mass) | | | | | | | | | | | |
| | Durum semolina | 16 | 16 | 16 | | 16 | 16 | 16 | 16 | 100 | |
| | Durum wheat flour | | | | 16 | | | | | | |
| | Moderate wheat flour A | 84 | | | | | | | | | 100 |
| | Moderate wheat flour B | | 84 | | | | | | | | |
| | Moderate wheat flour C | | | 84 | 84 | | | | | | |
| | Moderate wheat flour D | | | | | 84 | | | | | |
| | Moderate wheat flour E | | | | | | 84 | | | | |
| | Hard wheat flour | | | | | | | 84 | | | |
| | Semi-hard wheat flour | | | | | | | | 84 | | |
| | (Crude protein content) | (10.8) | (10.5 ) | (10.0 ) | (10.0 ) | (9.5) | (9.6) | (11.2 ) | (11.3 ) | (-) | (10.8 ) |
| Total | | 100 | 100 | 100 | 100 | 100 | 100 | 100 | 100 | 100 | 100 |
| Extrusion pressure (kgf/cm²) | | 70 | 70 | 70 | 70 | 70 | 70 | 70 | 70 | 70 | 70 |
| Evaluation | | | | | | | | | | | |
| | Texture of noodles | 4.3 | 4.1 | 3.8 | 3.8 | 2.8 | 2.6 | 3.0 | 2.8 | 3.0 | 2.0 |
| | Integration of noodles and sauce | 4.5 | 4.3 | 4.1 | 4.0 | 2.7 | 2.4 | 1.8 | 2.1 | 2.0 | 3.0 |
| | Texture of frozen noodles | 4.2 | 4.0 | 3.7 | 3.8 | 2.6 | 2.4 | 2.8 | 2.7 | 2.8 | 1.7 |
| | Integration of frozen n oodles and sauce | 4.5 | 4.3 | 4.0 | 3.9 | 2.5 | 2.2 | 1.5 | 1.8 | 1.8 | 2.5 |

### Test Example 2

Cooked noodles and frozen noodles were produced and evaluated in the same procedure as in Test Example 1 except that the compositions of the raw material flour were changed as shown in Table 2. The results are shown in Table 2. Additionally, the results of Production Example 1 are shown again in Table 2.

**[Table 2]**

| | | Comp. Ex. | Production examples | | | | | | | Comp. Ex. |
|---|---|---|---|---|---|---|---|---|---|---|
| | | 5 | 5 | 6 | 7 | 1 | 8 | 9 | 10 | 6 |
| Compositions of raw mate rial flour (parts by mass) | | | | | | | | | | |
| | Durum semolina | 0.5 | 1 | 3 | 7 | 16 | 23 | 26 | 29 | 33 |
| | Moderate wheat flour A | 99.5 | 99 | 97 | | 84 | 77 | | 71 | 67 |
| | Total | 100 | 100 | 100 | 100 | 100 | 100 | 100 | 100 | 100 |
| Extrusion pressure (kgf/cm 2) | | 70 | | | | | | | | |
| | Evaluation | | | | | | | | | |
| | Texture of noodles | 2.1 | 3.1 | 3.5 | 3.9 | 4.3 | 4.5 | 4.3 | 4.0 | 3.3 |
| | Integration of noodles and sauce | 3.1 | 3.5 | 3.7 | 4.2 | 4.5 | 4.3 | 4.0 | 3.6 | 2.8 |
| | Texture of frozen noodles | 1.9 | 3.0 | 3.4 | 3.8 | 4.2 | 4.4 | 4.2 | 3.9 | 3.1 |
| | Integration of frozen noodles and sauce | 2.7 | 3.3 | 3.6 | 4.1 | 4.5 | 4.3 | 3.9 | 3.5 | 2.6 |

### Test Example 3

Cooked noodles and frozen noodles were produced and evaluated in the same procedure as in Test Example 1 except that the extrusion pressure was changed as shown in Table 3. The results are shown in Table 3. Additionally, the results of Production Example 1 are shown again in Table 3.

**[Table 3]**

| | | Production examples | | | | | | |
|---|---|---|---|---|---|---|---|---|
| | | 11 | 12 | 13 | 1 | 14 | 15 | 16 |
| Compositions of raw material flour (parts by mass) | | | | | | | | |
| | Durum semolina | 16 | | | | | | |
| | Moderate wheat flour A | 84 | | | | | | |
| Total | | 100 | | | | | | |
| Extrusion pressure (kgf/cm²) | | 30 | 40 | 50 | 70 | 100 | 120 | 150 |
| Evaluation | | | | | | | | |
| | Texture of noodles | 3.3 | 3.9 | 4.1 | 4.3 | 4.4 | 4.2 | 3.8 |
| | Integration of noodles and sauce | 3.7 | 4.1 | 4.4 | 4.5 | 4.3 | 4.0 | 3.3 |
| | Texture of frozen noodles | 3.1 | 3.7 | 4.0 | 4.2 | 4.2 | 4.0 | 3.7 |
| | Integration of frozen noodles and sauce | 3.4 | 3.9 | 4.2 | 4.5 | 4.2 | 3.9 | 3.1 |

### Test Example 4

Cooked noodles and frozen noodles were produced and evaluated in the same procedure as in Test Example 1 except that the sectional shape of the noodles was changed as shown in Table 4 since the shape of the extrusion opening of the extrusion noodle making machine is changed. The results are shown in Table 4. Additionally, the results of Production Example 1 are shown again in Table 4.

**[Table 4]**

| | | Production examples | | | | | | |
|---|---|---|---|---|---|---|---|---|
| | | 17 | 1 | 18 | 19 | 20 | 21 | 22 |
| Compositions of raw mate rial flour (parts by mass) | | | | | | | | |
| | Durum semolina | 16 | | | | | | |
| | Moderate wheat flourA | 84 | | | | | | |
| Total | | 100 | | | | | | |
| Extrusion pressure (kgf/c m²) | | 70 | | | | | | |
| Section of noodles | | | | | | | | |
| | Shape | Round | Round | Round | Round | Square | Square | Square |
| | Size (mm) | 1.6ϕ | 1.8ϕ | 2.0ϕ | 2.2ϕ | 1.2 × 1.2 | 1.2 × 2.0 | 2.0 × 2.0 |
| Evaluation | | | | | | | | |
| | Texture of noodles | 4.1 | 4.3 | 4.4 | 4.3 | 3.9 | 4.4 | 4.2 |
| | Integration of noodles and sauce | 4.2 | 4.5 | 4.5 | 4.4 | 4.3 | 4.6 | 4.2 |
| | Texture of frozen noodles | 4.0 | 4.2 | 4.3 | 4.2 | 3.8 | 4.3 | 4.1 |
| | Integration of frozen noodles and sauce | 4.1 | 4.5 | 4.4 | 4.3 | 4.3 | 4.6 | 4.1 |

## Claims

1. A method for producing noodles, comprising extruding a dough at a pressure of 40 kgf/cm² to 120 kgf/cm², wherein the dough is prepared from a raw material flour containing durum wheat flour and moderate wheat flour having a crude protein content of 10% or more at a mass ratio of 1 : 99 to 29 : 71.

2. The method according to claim 1, further comprising heat-cooking the noodles obtained by the extruding.

3. The method according to claim 2, further comprising freezing the heat-cooked noodles.

4. The method according to claim 3, wherein the noodles are frozen with a sauce.

5. The method according to any one of claims 1 to 4, wherein the moderate wheat flour is at least one selected from the group consisting of wheat flour derived from a medium hard wheat and wheat flour derived from a soft wheat.

6. The method according to any one of claims 1 to 5, wherein the extruding is performed under a reduced pressure of -200 mmHg to -760 mmHg.

7. The method according to any one of claims 1 to 6, wherein the noodles are round noodles having a diameter of 1.8 mm or more or flat noodles having a width of 1.5 mm or more.

8. The method according to any one of claims 1 to 7, wherein the noodles are 15 to 23 cm in length.
